Europäisches Patentamt

(19) European Patent Office

Office européen des brevets

(11) Veröffentlichungsnummer: **0 203 335**
**B1**

(12) **EUROPÄISCHE PATENTSCHRIFT**

(45) Veröffentlichungstag der Patentschrifft:
21.03.90

(21) Anmeldenummer: 86105049.0

(22) Anmeldetag: 12.04.86

(51) Int. Cl. $^5$: **G 01 F 11/24**

(54) **Vorrichtung für die dosierte Zugabe eines rieselfähigen Feststoffes.**

(30) Priorität: 20.05.85 CH 2141/85

(43) Veröffentlichungstag der Anmeldung:
03.12.86 Patentblatt 86/49

(45) Bekanntmachung des Hinweises auf die Patenterteilung:
21.03.90 Patentblatt 90/12

(84) Bennante Vertragsstaaten:
AT BE CH DE FR GB IT LI NL SE

(56) Entgegenhaltungen:
GB-A-2 134 487
US-A-1 969 385
US-A-3 995 777

(73) Patentinhaber: **CONTRAVES AG**
**Schaffhauserstrasse 580**
**CH-8052 Zürich (CH)**
Patentinhaber: **SANDOZ AG**
**Lichtstrasse 35**
**CH-4002 Basel (CH)**

(72) Erfinder: **Angly, Henri**
**13 A, Flühstrasse Leymen**
**F-68220 Hegenheim (FR)**

LIBERGRAF, STOCKHOLM 1990

**Beschreibung**

Die Erfindung betrifft eine Vorrichtung für die dosierte Zugabe eines rieselfähigen Feststoffes zu einem Reaktionsbehälter, mit einem für den Anschluss an einen Zugabestutzen des Reaktionsbehälters vorgesehenen Zugabetrichter.

Für die automatische Durchführung von Reaktionsabläufen in einem Reaktionsbehälter ist es erwünscht, die Reaktionskomponenten mit hoher Genauigkeit nach einem vorgegebenen Zeitprogramm zugeben zu können, so dass sich der Reaktionsablauf mit hoher Genauigkeit wiederholen lässt und eine gleichmässige Produktqualität erzielbar ist. Dies trifft besonders auch für in Versuchslaboratorien durchgeführte Reaktionsabläufe zu, um Reihenversuche bis zu einer Optimierung durchführen zu können. Weiterhin soll kein Gas unkontrolliert aus dem Reaktionsbehälter heraus oder in ihn hinein strömen können, d.h. es soll verhindert werden, dass bei Unterbrechung der Zugabe eine Verbindung nach aussen oder zu einem Vorratsraum für die zuzugebende Reaktionskomponente entsteht, die zu einer unkontrollierten Veränderung dieser Reaktionskomponente führen würde. Für die Zugabe von flüssigen Reaktionskomponenten stellt die Erfüllung der angegebenen Forderungen durch Verwendung üblicher Dosierpumpen keine technischen Schwierigkeiten. Die bekannten Vorrichtungen zum Dosieren von rieselfähigen Feststoffen erfüllen diese Forderungen jedoch nicht oder nur unvollständig. Eine Übersicht über bekannte Vorrichtungen zum Dosieren von stückigen, körnigen und pulvrigen Füllgütern ist beispielsweise in der Zeitschrift "Verpackungs-Rundschau" 6/1984 auf Seiten 910 bis 922 gegeben.

Die Dosierung und Förderung von Gasen und (kompressiblen) Flüssigkeiten oder Gemischen durch eine einzige Vorrichtung ist beispielsweise in der GB-A-2 134 487 beschreiben. Sie arbeitet jedoch mit der Kompressibilität des strömenden Mediums und ist daher für die Dosierung rieselfähiger Feststoffe nicht geeignet.

Eine Vorrichtung zur Förderung von Feststoffen zeigt die US-A-3 995 777. Mit ihr kann aber nicht bzw. nur in sehr beschränktem Umfang dosiert werden. Das recht aufwendige Gatling-Prinzip sieht eine Mehrzahl von Kammern vor, in welche in einer ersten Stellung der vordosierte Stoff von oben nach unten eingeschüttet und in einer zweiten Stellung nach unten entleert wird. Für eine rasche Entleerung ist eine Ausblasvorrichtung vorgesehen, was aber ein unkontrolliertes Einströmen von Gas zur Folge hat.

Der Erfindung liegt die Aufgabe zugrunde, eine Vorrichtung der eingangs genannten Art zu finden, die die angegebenen Forderungen aufgrund möglichst einfacher konstruktiver Gestaltung in vollem Umfang erfüllt. Die Lösung dieser Aufgabe erfolgt aufgrund der Merkmale des Patentanspruchs 1. Vorteilhafte Ausgestaltungen der Erfindung sind Gegenstand der abhängigen Patentansprüche.

Im folgenden wird die Erfindung anhand eines in den Zeichnungen dargestellten Ausführungsbeispieles näher beschrieben. Es zeigt:

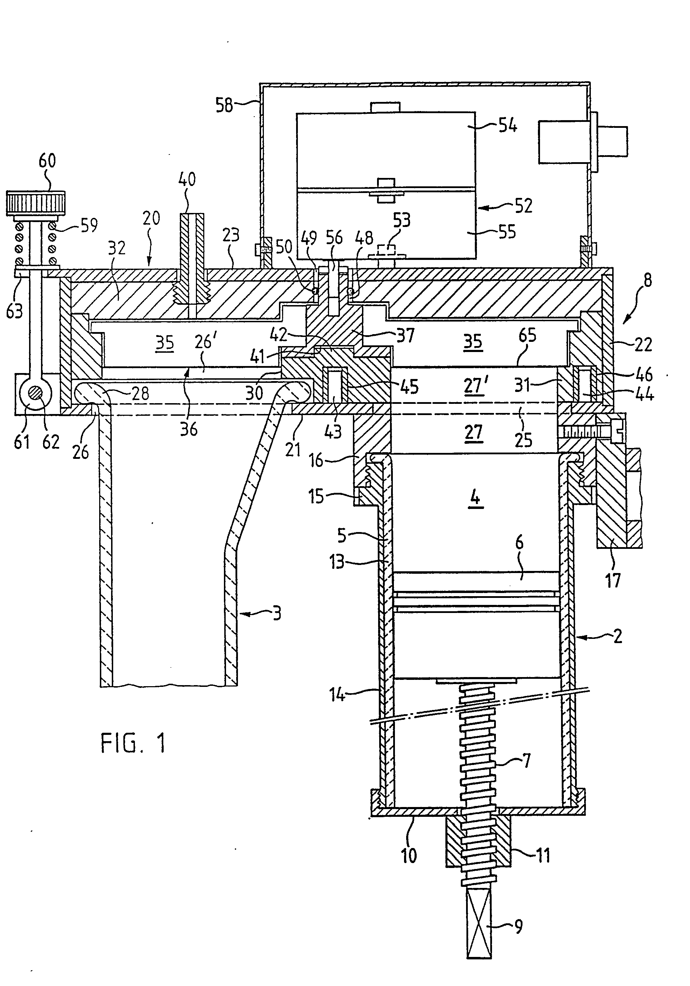

Fig. 1   einen Querschnitt durch eine erfindungsgemässe Vorrichtung in vereinfachter Darstellung und

Fig. 2   eine Aufsicht auf die Vorrichtung bei geöffneter Übergabekammer.

Wesentlich für die Erfindung ist die vertikale Ausrichtung der Achse einer Zylinder-Kolbeneinheit 2 für die geregelte Zufuhr eines rieselfähigen Feststoffes zu einem unterhalb des Zugabetrichters 3 angeordneten nicht dargestellten Laborreaktor. Der Reaktor, der z. B. aus Glas besteht, hat an seiner Oberseite mehrere Zugabestutzen, von denen einer mit dem Zugabetrichter 3 der erfindungsgemässen Vorrichtung über eine übliche Glasschliffverbindung dicht verbunden ist. Die Zugabe des rieselfähigen Feststoffes erfolgt somit unter dem Einfluss der Schwerkraft von oben, jedoch arbeitet die Zylinder-Kolbeneinheit von unten nach oben, indem der Vorratsraum 4 für den dem Reaktor zuzuführenden Feststoff sich in dem Dosier-Zylinder 5 oberhalb des Dosierkolbens 6 befindet.

Der Dosierkolben 6 wird durch eine Gewindespindel 7 in dem nur mit einem Teil seiner Länge dargestellten Dosierzylinder 5 langsam aufwärtsbewegt, um den Feststoff, gesteuert nach einem Zeitprogramm, in eine Übergabekammer 8 abzugeben. Hierfür wird ein mit dem Vierkantzapfen 9 verbundener nicht dargestellter Antrieb über einen der Reaktionssteuerung dienenden Computer hinsichtlich der Antriebsgeschwindigkeit und/oder Zeitphasen des Antriebs gesteuert. Der Dosierkolben 6 ist durch Reibungskräfte gegen Mitdrehen gehalten, so dass sich nur die Gewindespindel 7 in der am Boden 10 des Dosierzylinders vorgesehenen Gewindehülse 11 dreht und den Dosierkolben 6 über ein nicht dargestelltes Axiallager verschiebt, das sich am oberen Ende der Gewindespindel 7 innerhalb des Dosierkolbens 6 befindet.

Für eine gute Abdichtung des Dosierkolbens 6 in dem Dosierzylinder 5 und eine Widerstandsfähigkeit gegen chemisch aggressive Feststoffe besteht der Dosierkolben 6 beispielsweise aus geeignetem Kunststoff und der Dosierzylinder 5 aus Glas oder transparentem Kunststoff. Für die Herstellung der Zylinder-Kolbeneinheit 2 können die Zylinder und Kolben einer für Flüssigkeiten hergestellten handelsüblichen Dosier- oder Injektionsspritze verwendet werden, indem der Glaszylinder 13 in eine Halterung 14 eingesetzt wird, deren angeschraubter Boden 10 die Gewindehülse 11 aufweist und deren oberes Ende 15 an einem unterhalb der Übergabekammer 8 vorgesehenen Sockelteil 16 angeschraubt ist.

An dem Sockelteil 16 ist seitlich eine Halterung 17 vorgesehen, in die eine nicht dargestellte Stange einer üblichen Laborstativhalterung eingreifen kann, um die Vorrichtung in gewünschter Position relativ zu dem Laborreaktor anzubringen.

Der zentrale Teil der erfindungsgemässen Vorrichtung ist durch die Übergabekammer 8 gebildet. Sie hat ein aus korrosionsfestem Stahl bestehendes Aussengehäuse 20 mit einer ebenen, kreisrunden Bodenplatte 21, einer kreiszylindrischen Seitenwand 22 und einer ebenen Deckelplatte 23. In der Bodenplatte 21 befinden sich zwei diametral zueinander angeordnete Öffnungen 25, 26. Die Öffnung 25 nimmt den Sockelteil 16 auf, der mit einer entsprechend grossen, bzw. angenähert so grossen Öffnung 27 den Übergang zu dem Dosierzylinder 5 bildet. In die Öffnung 26 der Bodenplatte 21 ist der Zugabetrichter 3 eingesetzt, der mit seinem den Öffnungsrand übergreifenden Flansch 28 an dieser Bodenplatte 21 gehalten ist.

Das Aussengehäuse 20 umschliesst mehrere auskleidende innere Gehäuseteile, d.h. eine Bodenwandplatte 30, mit die Öffnungen 26, 27 überdeckenden Öffnungen 26', 27', einen Seitenwandring 31 und eine Deckelwandplatte 32, die aus Kunststoff bestehen und für ihre Formstabilität verhältnismässig dickwandig ausgeführt sind. Diese inneren Gehäuseteile dienen dem engen, abdichtenden Kontakt mit den flügelartigen Förderelementen 35 eines in der Übergabekammer 8 eingeschlossenen rotierenden Förderorgans 36. Für eine leichte Reinigung sind die inneren Gehäuseteile lose in das Aussengehäuse eingesetzt.

Das rotierende Förderorgan 36 hat vier in gleichem Winkel zueinander von einem zentralen Wellenkörper 37 radial abstehende Förderelemente 35, die mit vertikal ausgerichtetem rechteckförmigem Querschnitt den Innenraumquerschnitt der Übergabekammer 8 zusammen mit dem Wellenkörper 37 mit geringem Dichtspalt vollständig ausfüllen, so dass in der Übergabekammer 8 eine schleusenartige Abdichtung zwischen dem mit dem Innenraum des Reaktionsbehälters direkt verbundenen Zugabetrichter 3 und dem oberhalb des Dosierkolbens 6 vorhandenen Vorratsraum 4 vorhanden ist. Ein an der Deckelwandplatte 32 vorgesehener Anschlussstutzen 40, der sich durch die äussere Deckelplatte 23 hindurch nach aussen erstreckt, ermöglicht eine Spülung der Übergabekammer 8 durch ein Inertgas. Der Wellenkörper 37 umschliesst mit einer Zentriervertiefung 41 einen kurzen, an der Bodenwandplatte 30 angeformten Zentrierzapfen 42, und für die Verdrehsicherung der Bodenwandplatte 30 ist diese auf zwei in der Bodenplatte 21 vorgesehene Zapfen 43, 44 mittels in sie eingelassener Buchsen 45, 46 aufgesteckt. Nach oben erstreckt sich der Wellenkörper 37 durch je eine Bohrung 48, 49 in der Deckelwandplatte 32 und der Deckelplatte 23 und ist mittels eines O-Ringes 50 gegenüber der Bohrung 48 abgedichtet. Der Antrieb 52 für das Förderorgan 36 ist an einem Zapfen 53 der Deckelplatte 23 befestigt. Er besteht aus einem Elektromotor 54 und einem Reduktionsgetriebe 55, dessen abgeflachtes Wellenende 56 in einen Schlitz 57 am oberen Ende des Wellenkörpers 37 eingreift, so dass die Kupplung zwischen dem Antrieb und dem rotierenden Förderorgan beim Abheben der Deckelplatte und damit des Antriebs leicht lösbar ist. Zum Schutz des Antriebs 52 ist dieses von einem Gehäuse 58 umschlossen, das an der Deckelplatte 23 angeschraubt ist.

Ein leichtes Öffnen der Übergabekammer 8 ist zum Reinigen des Förderorganes 36 sowie der Innenflächen der Übergabekammer erforderlich. Ausserdem ist durch Öffnen der Übergabekammer 8 ein Füllen des Vorratsraumes 4 möglich, anstatt den Dosierzylinder 5 von dem Sockelteil 16 abzuschrauben. Zum Öffnen der Übergabekammer 8 werden von Hand drei Schraubenmuttern 60 gelöst, so dass sich die Verriegelungsbolzen 61 um ihre an dem Seitenwandteil 22 gehaltenen Achsbolzen 62 zur Freigabe der Haltegabeln 63 der Deckelplatte 23 nach aussen schwenken lassen. Zwischen die Schraubenmuttern 60 und die Deckelplatte 23 eingeschlossene Schraubenfedern 59 bewirken einen elastischen Andruck der Deckelplatte 23 gegen die Deckelwandplatte 32, die das Förderorgan 36, bzw. ihre Förderelemente 35 abdeckt.

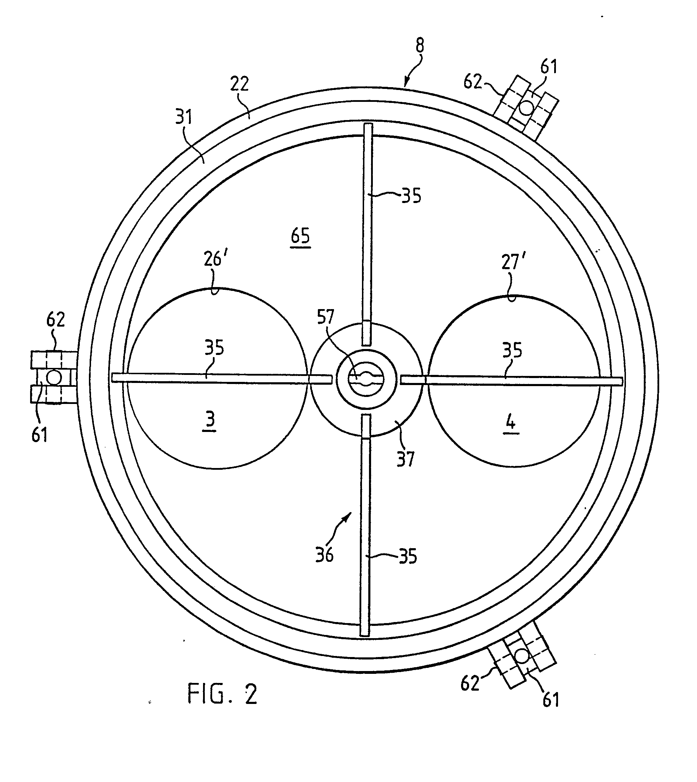

Die Fig. 2 veranschaulicht, dass durch die vier Förderelemente 35 in jeder Drehposition des Förderorgans 36 der Gasraum oberhalb des Vorratsraumes 4 gegenüber dem Gasraum oberhalb des Zugabetrichters 3 abgesperrt ist. Die Drehung des Förderorgans 36 bewirkt, dass eine durch die gesteuerte Aufwärtsbewegung des Dosierkolbens 4 über die Ebene der Bodenfläche 65 der Bodenwandplatte 30 nach oben geförderte Feststoffmenge durch die Förderelemente 35 in Drehrichtung über die Bodenfläche 65 hinweg zu dem Zugabetrichter 3 gefördert wird, so dass sie über diesen in den Reaktionsbehälter hineinfällt. Die glatte Oberfläche der aus Kunststoff bestehenden inneren Gehäuseteile 30, 31, 32, an der sich die Förderelemente 35 aus Kunststoff mit guten Gleiteigenschaften in engem Kontakt entlang bewegen, verhindert einen Übergabeverlust durch anhaftende Feststoffteile. Es versteht sich, dass die Förderelemente 35 verschiedene Formen haben können und in verschiedener Anzahl vorgesehen sein können.

Die vertikale Anordnung des Dosierzylinders 5 hat den Vorteil, dass der körnige bzw. rieselfähige Feststoff unter genau definiertem Schwerkrafteinfluss in dem Vorratsraum 4 eingeschlossen ist, so dass er sehr gleichmässig dosiert werden kann, indem die Dosiergenauigkeit nicht durch Rieselbewegungen beeinträchtigt wird.

**Patentansprüche:**

1. Vorrichtung für die dosierte Zugabe eines rieselfähigen Feststoffes zu einem Reaktionsbehälter mit einem für den Anschluss an einen Zugabestutzen des Reaktionsbehälters vorgesehenen Zugabetrichter (3), gekennzeichnet durch eine Dosiereinrichtung (5, 6) eine die Eintrittsöffnung (26') des Zugabetrichters (3) mit der Austrittsöffnung (27') der Dosiereinrichtung (5, 6) verbindende Übergabekammer (8), in deren Bodenteil (21, 30) diese Öffnungen (26', 27') vorgesehen sind, wobei in der Übergabekammer (8) rotierende flügartige Förderelemente (35) eingeschlossen sind für die Förderung des rieselfähigen Feststoffes von der Dosiereinrichtung (5, 6) zum Zugabetrichter (3) und wobei die Dosiereinrichtung aus einer vertikal ausgerichteten Zylinder-Kolbeneinheit (5, 6) besteht, deren Vorratsraum (4) sind oberhalb des Kolbens (6) befindet.

2. Vorrichtung nach Anspruch 1 dadurch gekennzeichnet, dass die Förderelemente (35) in jeder Drehposition den die Austrittsöffnung (27') der Dosiereinrichtung (5, 6) aufweisenden Teil der Übergabekammer (8) gegenüber dem die Eintrittsöffnung (26') aufweisenden Teil der Übergabekammer (8) abdichten, indem jedes Paar vor Förderelementen sich über den gesamten Querschnitt des Innenraums der Übergabekammer (8) erstreckt.

3. Vorrichtung nach Anspruch 1 oder 2, dadurch gekennzeichnet, dass an der Übergabekammer (8) ein Anschluss (40) für die Zuführung eines Gases in ihren Innenraum vorgesehen ist.

4. Vorrichtung nach einem der Ansprüche 1 bis 3, dadurch gekennzeichnet, dass die Übergabekammer (8) einen horizontal ausgerichteten ebenen Boden (21, 30), einen dazu parallelen ebenen Deckel (23, 32) sowie eine kreisringförmige Seitenwand (22, 31) aufweist.

5. Vorrichtung nach Anspruch 4, dadurch gekennzeichnet, dass die Übergabekammer (8) ein Aussengehäuse (20, 21, 22, 23) mit einer lösbaren Deckelplatte (23) aufweist, das innere, auskleidende Gehäuseteile (30, 31, 32) umschliesst.

6. Vorrichtung nach Anspruch 5, dadurch gekennzeichnet, dass die auskleidenden Gehäuseteile lose in das Aussengehäuse eingesetzt sind.

7. Vorrichtung nach einem der Ansprüche 1 bis 6, dadurch gekennzeichnet, dass die mit dem zu dosierenden Feststoff in Kontakt gelangenden Teile der Vorrichtung aus Glas oder Kunststoff bestehen, wobei der Zugabetrichter (3) und der Dosierzylinder (13) aus Glas bestehen.

## Claims

1. Device for metered delivery of a free-flowing solid to a reaction vessel, including a hopper (3) for connection to a delivery pipe socket of the reaction vessel, characterised by a metering device (5, 6), a transfer chamber (8) connecting the inlet opening (26') of the hopper (3) with the outlet opening (27') of the metering device (5, 6), in the bottom section (21, 30) of which chamber these openings (26', 27') are provided, wherein rotary wing-type conveyor elements (35) are encased in the transfer chamber (8) for conveying of free-flowing solid material from the metering device (5, 6) to the hopper (3), and wherein the metering device includes a vertically disposed cylinder-piston unit (5, 6) with its storage space (4) located above the piston (6).

2. Device according to claim 1, characterised in that the conveyor elements (35) in any rotational position seal the section of the transfer chamber (8) which houses the outlet opening (27') of the metering device (5, 6) from the section of the transfer chamber (8) which houses the inlet opening (26'), by each pair of conveyor elements extending across the entire crosssection of the interior space of the transfer chamber (8).

3. Device according to claim 1 or 2, characterised in that the transfer chamber (8) is provided with a connection (40) for the delivery of a gas into its interior space.

4. Device according to one of the claims 1 to 3, characterised in that the transfer chamber (8) includes a horizontally aligned planar bottom (21, 30), a planar cover (23, 32) in parallel therewith, and a circular lateral wall (22, 31).

5. Device according to claim 4, characterised in that the transfer chamber (8) has an exterior housing (20, 21, 22, 23) including a separable cover plate (23) which encases internal lining housing parts (30, 31, 32).

6. Device according to claim 5, characterised in that the lining housing parts are loosely inserted into the exterior housing.

7. Device according to one of the claims 1 to 6, characterised in that the parts making contact with the solid to be metered are made of glass or plastics material whereas the hopper (3) and the metering cylinder (13) are made of glass.

## Revendications

1. Dispositif d'apport par dosage d'un matériau solide pouvant s'écouler vers un réacteur, comportant pour la liaison une trémie de chargement (3) munie d'un embout de chargement du réacteur, caractérisé par un dispositif de dosage (5, 6), une ouverture d'admission (26') de la trémie de chargement (3) avec l'ouverture de sortie (27') de la chambre de transfert (8) reliant au dispositif de dosage (5, 6), ces ouvertures (26', 27') étant prévues dans le fond de la trémie (21, 30), des éléments rotatifs de transport en forme d'ailettes (35) sont insérés dans la chambre de transfert (8) pour transporter le matériau solide pouvant s'écouler à partir du dispositif de dosage (5, 6) vers la trémie de chargement (3), et le dispositif de dosage se compose d'un ensemble cylindre-piston pratiquement vertical (5, 6) dont l'espace de stockage (4) se trouve au-dessus du piston (6).

2. Dispositif selon la revendication 1, caractérisé en ce que les éléments de transport (35) en chacune des positions de rotation rendent étanche la partie de la chambre de transfert (8) comportant l'ouverture de sortie (27'), du dispositif de dosage (5, 6) par rapport à la partie de la chambre de transfert (8) comportant l'ouverture d'entrée (26') par le fait que chaque paire d'éléments de transport s'étend sur la totalité de la section de l'espace intérieur de la chambre de transfert (8).

3. Dispositif selon l'une quelconque des revendications 1 ou 2, caractérisé en ce qu'est prévu sur la chambre de transfert (8) un branchement (40) pour l'amenée d'un gaz dans l'espace intérieur.

4. Dispositif selon l'une des revendications 1 à 3, caractérisé en ce que la chambre de transfert (8) comporte un fond plat orienté horizontalement (21, 30), un couvercle plan (23, 32) parallèle à ce fond, et une paroi latérale en forme d'anneau circulaire (22, 31).

5. Dispositif selon la revendication 4, caractérisé en ce que la chambre de transfert (8) comporte un boîtier extérieur (20, 21, 22, 23) avec une plaque de couvercle (23) amovible qui entoure la partie de boîtier intérieure recouverte (30, 31, 32).

6. Dispositif selon la revendication 5, caractérisé en ce que les parties recouvertes du boîtier sont introduites de façon amovible dans le boîtier extérieur.

7. Dispositif selon l'une des revendications 1 à 6, caractérisé en ce que les parties du dispositif se trouvant en contact avec la matière solide à doser sont constituées de verre ou de matière synthétique, la trémie de chargement (3) et le cylindre de dosage (13) se composant de verre.

FIG. 1

FIG. 2